# EUROPEAN PATENT APPLICATION

(11) **EP 4 009 502 A1**
(43) Date of publication of application: **08.06.2022**
(21) Application number: 20211135.7
(22) Date of filing: 02.12.2020
(51) Int. Cl.: H02K 15/02, H02K 1/14, H02K 1/16

(54) **A METHOD FOR MANUFACTURING A STATOR FOR AN ELECTRICAL MACHINE**

(71) Applicant: VOLVO TRUCK CORPORATION, 405 08 Göteborg (SE)
(72) Inventor: CIRANI, Maddalena, 416 67 Göteborg (SE)
(74) Representative: Valea AB

(57) **Abstract**

The invention relates to a method for manufacturing a stator (1) for an electrical machine (10), comprising:
- providing (S1) a first cylindrically formed stator core member (2) comprising a plurality of axially extending slots (3) distributed in a circumferential direction thereof, wherein the slots form axially extending openings (31) on either an outer (21) or an inner (22) peripheral circumferential surface of the first cylindrically formed stator core member;
- inserting (S2), in a radial direction, a plurality of conductor sets (4) into the slots via the axially extending openings, wherein each conductor set extends axially with respect to the stator between a first and a second axial end (a1, a2), wherein at least one of the first and second axial ends is an open axial end adapted to be connected to a corresponding open axial end of another conductor set provided in another slot;
- providing (S3) a second stator core member (5); and
- covering (S4), by the second stator core member, the axially extending openings of the slots comprising the plurality of conductor sets. The invention also relates to a stator, an electrical machine and to a vehicle.

## Description

### TECHNICAL FIELD

The invention relates to a method for manufacturing a stator for an electrical machine. The invention also relates to a stator for an electrical machine, to an electrical machine and to a vehicle comprising the electrical machine.

The invention can be applied in heavy-duty vehicles, such as trucks, buses and construction equipment. Although the invention will be described with respect to a truck, the invention is not restricted to this particular vehicle, but may also be used in other vehicles and applications such as passenger cars. The invention is also not only restricted to vehicles but may also be used for other applications utilizing an electrical machine.

### BACKGROUND

A stator for an electrical machine usually comprises a stator core made from iron and stator windings also known as e.g. armature windings or field coils. Typically, the winding(s)/coil(s) is/are placed/mounted in slots inside the stator core.

Electrical machines used for example in powertrains of electric and hybrid vehicles commonly require high torque density and power density. One way of achieving this is to increase the amount of copper in the slots of the stator. The ratio between the slot area and the area occupied by conductive material in the slots is known as fill factor. A high fill factor may reduce the slot height and, therefore, reduce the machine's volume leading to higher generated torque density. A high fill factor may also be advantageous for the machine's cooling capability since a high fill factor may reduce the amount of insulation material in the slots. More specifically, the insulation material is often characterized by low thermal conductivity, and therefore reducing the amount of insulation material may increase the cooling capability. This in turn allows to increase the machine load and consequently increase the torque density given the same cooling capability.

An electrical machine can comprise distributed or concentrated windings.

For large machines with distributed windings one common way of manufacturing the stator is typically to use so called diamond windings, where the coil is manufactured before it is inserted into the slots. Usually the conductors, i.e. conductive wires, have a rectangular cross-sectional profile providing an increased fill-factor compared to round/circular cross-sectional profiles. However, this approach requires open slots to allow the insertion of the diamond windings into the slots from the air-gap. The open slots may have a negative effect on for example increased torque ripple or space harmonic losses.

For small machines with distributed windings, the stator can be manufactured using mush windings with round conductor section and semi-opened slots. This solution is typically adopted in industrial applications.

Another way of manufacturing a stator for small machines with distributed windings is to use so called hairpin windings, which are characterized by an open ended coil constituted by rectangular-shaped wires. The hairpin windings are inserted axially into the slots, i.e. in the direction of the rotational axis of the electrical machine. Subsequently the open ends of the hairpin windings are welded together with the hairpin windings of another coil.

Even though there are numerous ways of manufacturing a stator for an electrical machine, there is still a strive of developing further improved and/or alternative stator manufacturing methods.

### SUMMARY

In view of the above, an object of the invention is to provide an improved method for manufacturing a stator for an electrical machine which alleviates at least some of the drawbacks of the prior art, and/or to at least provide a suitable alternative to the already known manufacturing methods. Another object of the invention is to provide an improved stator for an electrical machine, an electrical machine and a vehicle comprising the electrical machine, or to at least provide a suitable alternative.

According to a first aspect of the invention, the object is achieved by a method according to claim 1. According to a second aspect of the invention, the object is achieved by a stator according to claim 9. According to a third aspect of the invention, the object is achieved by an electrical machine according to claim 14. According to a fourth aspect of the invention, the object is achieved by a vehicle according to claim 15.

According to the first aspect, the object is achieved by a method for manufacturing a stator for an electrical machine. The method comprises:
- providing a first cylindrically formed stator core member comprising a plurality of axially extending slots distributed in a circumferential direction thereof, wherein the slots form axially extending openings on either an outer or an inner peripheral circumferential surface of the first cylindrically formed stator core member;
- inserting, in a radial direction, a plurality of conductor sets into the slots via the axially extending openings, wherein each conductor set extends axially with respect to the stator between a first and a second axial end, wherein at least one of the first and second axial ends is an open axial end adapted to be connected to a corresponding open axial end of another conductor set provided in another slot;
- providing a second stator core member; and
- covering, by the second stator core member, the axially extending openings of the slots comprising the plurality of conductor sets.

The directions, axial and radial, as used herein refers to directions with respect to the stator, typically in the form of a cylinder, and/or with respect to an electrical machine in which the stator is used. The axial direction corresponds to a direction of a centre axis of the stator and/or of a rotational axis of the electrical machine. The radial direction corresponds to a direction along an axis which is perpendicular to the axial direction and intersects the centre axis and/or the rotational axis.

The expression *"conductor set"* as used herein means a set, i.e. more than one, of conductors bundled together as a group of conductors. Each conductor of the conductor set is a conductive element, typically a wire, such as a wire made of copper. Further, each conductive element is preferably insulated with respect to each other and the "conductor set" is also preferably insulated.

The expression *"open axial end"* of a conductor set as used herein means that the conductors of the conductor set at an axial end thereof are open, i.e. open in the sense that it is either a conductive starting or ending point for the respective conductor. Accordingly, the conductive starting or ending point for the respective conductor is adapted to be connected, e.g. welded or soldered, to another conductor of another conductor set.

The expression *"covering"* as used herein means that the axially extending openings of the slots are covered either from an outside or from a hollow inside of the stator. In other words, either the outer circumferential peripheral surface or the inner circumferential peripheral surface of the first stator core member is covered by the second stator core member. Covering may herein also be denoted as enclosing or closing.

By the provision of the method as disclosed herein, a stator may be more efficiently manufactured, implying easier insertion of the coil in the slot, reduced cost, faster production and/or improved manufacturing procedure adapted for automatization. In particular, the method may provide a stator with high fill factor and reduce the risk to damage the slot insulation compared to the conventional axial insertion of the coil. This is achieved by providing a plurality of conductor sets as disclosed herein and inserting them in a radial direction into the slots, i.e. either from an outside of the stator or from an inside of the stator. Inserting the plurality of conductor sets into the slots via the axially extending openings may in one embodiment mean inserting one conductor set into each slot. However, it may also in another embodiment mean inserting more than one conductor set into each slot. The present method may also allow the ends of the conductor sets which extend axially outside the cylindrically formed stator core member/s to remain short. Furthermore, according to an example embodiment, the second stator core member may be manufactured with oriented electrical steel, which may reduce the thickness of the element itself. Consequently, the method as disclosed herein may contribute to a higher torque and power density. Further, by using a segmented stator core, i.e. the first cylindrically formed stator core member and the second stator core member, together with the conductor sets as disclosed herein, the method may be suitable for automatization. This is because the parts may be more favourably assembled and/or adapted for automatization.

Preferably, the first cylindrically formed stator core member is constituted by a plurality of laminations of for example electrical steel bundled together along the axial direction of the stator. For example, the laminations may be a plurality of annular-shaped elements bundled together to form the first cylindrically formed stator core member. The annular-shaped elements comprise the slots as disclosed herein.

Preferably, the second stator core member is a second cylindrically formed stator core member.

Optionally, covering the axially extending openings of the slots comprising the plurality of conductor sets may comprise axially moving the second stator core member relative the first cylindrically formed stator core member. Purely by way of example, axially moving the second stator core member relative the first cylindrically formed stator core member may be achieved by axially sliding the second stator core member onto the first cylindrically formed stator core member. This may be regarded as a cost-effective way of covering the slots, especially when the procedure is automated.

Optionally, the method may further comprise connecting each open axial end to the corresponding open axial end. Connecting may be performed by any suitable joining technique, such as by welding or soldering. By connecting is herein meant that each open axial end of each conductor is connected to a corresponding open axial end of a conductor of another conductor set. Purely by way of example, the corresponding open axial end may be part of a conductor set which is provided in an adjacent slot or in a slot further away. Accordingly, the present invention is applicable to both a distributed and a concentrated winding configuration of an electrical machine.

Preferably, axially moving the second stator core member relative the first cylindrically formed stator core member may be initiated from an axial end face of the first cylindrically formed stator core member having conductor sets with open axial ends, wherein connecting the open axial ends at the axial end face from which the relative axial movement is initiated is conducted after the relative axial movement. It has been realized that the second stator core member may be easier to axially move from an axial end face of the first cylindrically formed stator core member having conductor sets with open axial ends. More specifically, the open unconnected axial ends may be properly shaped, i.e. preformed, not to obstruct the movement of the second stator core member. The connection after the insertion of the second stator core member may thereby reduce the risk of impeding the movement.

Optionally, the second stator core member may be a single-piece unit. Providing the second stator core member as a single-piece unit may further facilitate the manufacturing procedure, especially if it is an automated procedure. In particular, it may be easier to automate the step of covering the slots when a single-piece unit is used. For example, a machine for the covering step may only be designed to move the second stator core member in one direction, e.g. by use of an actuator performing only a translational movement.

Optionally, the method may further comprise moulding the second stator core member onto the first cylindrically formed stator core member. This may be an alternative efficient way of covering the slots.

Optionally, each conductor set may comprise an axially extending straight portion and an axially outer inclined portion at at least one of its axial ends which is an open axial end, wherein the axially outer inclined portion forms an angle with respect to the straight portion, and wherein the straight portion is inserted into the respective slot and the axially outer inclined portion is provided axially outside an axial end face of the first cylindrically formed stator core member and/or of the second stator core member. It has been realized that the conductor sets are preferably formed as mentioned in the foregoing, since it thereby will be easier to connect the open axial ends of the conductor sets together. In particular, the outer inclined portion(s) may shorten the distance between the open axial ends which shall be connected. Preferably, the conductor sets are preformed into this shape before they are inserted into the slots. Still optionally, each axial end of the conductor sets may comprise an inclined portion as disclosed herein. This implies further facilitated manufacturing and/or increased flexibility since it may enable and/or facilitate the second stator core member to be axially moved from any one of the axial end faces. Accordingly, each conductor set may have a straight portion and axially outer inclined portions on each axial side. Such conductor sets are preferably preformed into this shape before they are inserted into the slots.

Optionally, each conductor of the conductor set may have a square-shaped, rectangular-shaped or round-shaped cross section. In particular, a rectangular-shaped cross section has shown to be suitable for increasing the fill factor in the slots.

According to the second aspect, the object is achieved by a stator for an electrical machine. The stator comprises:
- a first cylindrically formed stator core member comprising a plurality of axially extending slots distributed in a circumferential direction thereof, wherein the slots form axially extending openings on either an outer or an inner peripheral circumferential surface of the first cylindrically formed stator core member;
- a plurality of conductor sets provided in the slots, wherein each conductor set extends axially with respect to the stator between a first and second axial end, wherein at least one of the first and second axial ends is an open axial end adapted to be connected to a corresponding open axial end of another conductor set provided in another slot;
- a second stator core member, wherein the axially extending openings of the slots are covered by the second stator core member.

Advantages and effects of the second aspect are largely analogous to the advantages and effects provided by the first aspect of the invention. It shall also be noted that all embodiments of the first aspect of the invention are combinable with all embodiments of the second aspect of the invention and vice versa. In particular, the stator configuration enables cost-efficiency and increased fill factor as mentioned in the above, resulting in higher torque and power density.

Optionally, each open axial end may be connected, such as by a welding or soldering joint, to the corresponding open axial end. As mentioned in the above, the connecting of the open axial ends is preferably performed after the second stator core member has been mounted on the first cylindrically formed stator core member for covering the slots.

Optionally, each conductor set may comprise an axially extending straight portion and an axially outer inclined portion at at least one of its axial ends which is an open axial end, wherein the axially outer inclined portion forms an angle with respect to the straight portion, and wherein the straight portion is provided in the respective slot and the axially outer inclined portion is provided axially outside an axial end face of the first cylindrically formed stator core member and/or of the second stator core member. Still optionally, each axial end may be an open axial end, wherein an inclined portion is provided at each axial end. Just as a matter of example, the angles formed between each inclined portion and the straight portion may be similar or different. As another example, and as also mentioned in the above, the conductor sets are preferably preformed before they have been inserted into the slots. Still further, once the open axial ends have been connected to corresponding open axial ends, the ends will comprise a joint, such as a welding joint or a soldering joint. Accordingly, the stator as disclosed herein may on at least one of its axial end faces comprise a plurality of conductor joints.

Optionally, the second stator core member may be a single-piece unit. Alternatively, the second stator core member may be segmented, such as segmented in two or more separate pieces. For example, the second stator core member may be compiled of segments which are connected along intersections extending in the axial direction and/or in a plane defined by the radial direction. Preferably, such segments, when connected, form a second cylindrically formed stator core member.

Optionally, each conductor of the conductor set may have a square-shaped, rectangular-shaped, or round-shaped cross section.

According to the third aspect of the invention, the object is achieved by an electrical machine comprising the stator according to any one of the embodiments of the second aspect of the invention. Advantages and effects of the third aspect are largely analogous to the advantages and effects provided by the first and second aspects of the invention. It shall also be noted that all embodiments of the third aspect are combinable with all embodiments of the first and second aspects of the invention and vice versa.

The electrical machine typically comprises a rotor which is coaxial with and provided inside the stator, and adapted to rotate with respect a rotational axis, corresponding to the centre axis of the stator. Accordingly, the first cylindrically formed stator core member and the second stator core member are hollow cylindrical elements. However, in an alternative embodiment, the rotor may also be mounted radially outside of the stator. As such, the first cylindrically formed stator core member does not necessarily need to be hollow.

The electrical machine may be an electric motor and/or generator.

According to the fourth aspect of the invention, the object is achieved by a vehicle comprising the electrical machine according to any one of the embodiments of the third aspect of the invention. Advantages and effects of the fourth aspect are largely analogous to the advantages and effects provided by the first, second and third aspects of the invention. It shall also be noted that all embodiments of the fourth aspect are combinable with all embodiments of the first, second and third aspects of the invention and vice versa.

The vehicle may comprise one or more such electrical machines.

According to a fifth aspect, the object is achieved by a method for manufacturing a stator for an electrical machine, comprising:
- providing a first cylindrically formed stator core member comprising a plurality of axially extending slots distributed in a circumferential direction thereof, wherein the slots form axially extending openings on either an outer or an inner peripheral circumferential surface of the first cylindrically formed stator core member;
- inserting, in a radial direction, a plurality of conductor sets into the slots via the axially extending openings, wherein each conductor set extends axially with respect to the stator between a first and a second axial end, wherein at least one of the first and second axial ends is an open axial end adapted to be connected to a corresponding open axial end of another conductor set provided in another slot; and/or
- inserting, in the radial direction, one or more complete coil units into the slots via the axially extending openings, wherein each complete coil unit is formed by conductor segments which extend axially in respective slots;
- providing a second stator core member; and
- covering, by the second stator core member, the axially extending openings of the slots comprising the plurality of conductor sets.

In view of the foregoing, it has further been realized that the present invention may also be applicable when using one or more complete coil units. The expression "complete coil unit" as used herein means a complete coil which is ready to be used in an electrical machine. A complete coil unit has a conductive starting point and conductive ending point. The conductive starting point and ending point may be provided at a respective first and second angular position, as seen in the circumferential direction, of the stator. The angle between the two angular positions may for example be in the range of 5 to 360 degrees. Accordingly, if the angle is 360 degrees the complete coil unit will extend all around the stator, as seen in its circumference. Preferably, the angle is in the range of 30-60 degrees. Further, the complete coil unit may be able to flex so that its diameter can be expanded and/or reduced during the insertion step.

Accordingly, by the provision of the method as disclosed herein, a stator may be more efficiently manufactured, implying easier insertion of the coil in the slot, reduced cost, faster production and/or improved manufacturing procedure adapted for automatization. Advantages and effects of the fifth aspect are largely analogous to the advantages and effects provided by the first, second, third and fourth aspects of the invention. It shall also be noted that all embodiments of the fifth aspect are combinable with all embodiments of the first, second, third and fourth aspects of the invention and vice versa.

Optionally, the complete coil unit may be provided in non-adjacent slots, i.e. it may be provided as a so called distributed winding. Alternatively, it may also be provided as a concentrated winding.

Preferably, the one or more complete coil units are inserted in the radial direction from the outside of the first cylindrically formed stator core member.

Optionally, covering the axially extending openings of the slots comprising the plurality of conductor sets and/or the one or more complete coil units comprises axially moving the second stator core member relative the first cylindrically formed stator core member.

Optionally, each conductor of the conductor set and/or of the one or more complete coil units may have a square-shaped, rectangular-shaped or round-shaped cross section.

According to a sixth aspect, the object is achieved by a stator for an electrical machine, comprising:
- a first cylindrically formed stator core member comprising a plurality of axially extending slots distributed in a circumferential direction thereof, wherein the slots form axially extending openings on either an outer or an inner peripheral circumferential surface of the first cylindrically formed stator core member;
- a plurality of conductor sets provided in the slots, wherein each conductor set extends axially with respect to the stator between a first and second axial end, wherein at least one of the first and second axial ends is an open axial end adapted to be connected to a corresponding open axial end of another conductor set provided in another slot; and/or
- one or more complete coil units provided in the slots, wherein each complete coil unit is formed by conductor segments which extend axially in respective slots; and
- a second stator core member, wherein the axially extending openings of the slots are covered by the second stator core member.

Advantages and effects of the sixth aspect are largely analogous to the advantages and effects provided by the first, second, third, fourth and fifth aspects of the invention. It shall also be noted that all embodiments of the sixth aspect are combinable with all embodiments of the first, second, third, fourth and fifth aspects of the invention and vice versa.

Optionally, each conductor of the conductor set and/or of the one or more complete coil units may have a square-shaped, rectangular-shaped, or round-shaped cross section.

According to a seventh aspect, the object is achieved by an electrical machine comprising the stator according to any one of the embodiments of the sixth aspect.

According to an eight aspect, the object is achieved by a vehicle comprising the electrical machine according to any one of the embodiments of the seventh aspect.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a vehicle according to an example embodiment of the present invention;
Fig. 2a is a cross-sectional view of a stator according to an example embodiment of the present invention;
Fig. 2b is a perspective view of a stator according to an example embodiment of the present invention before it has been assembled;
Fig. 3 is a side view of a conductor set according to an example embodiment of the present invention;
Fig. 4 is a cross-sectional view of an electrical machine according to an example embodiment of the present invention;
Fig. 5 is a cross-sectional view of a stator according to another embodiment of the present invention;
Fig. 6 is a cross-sectional view of a stator according to yet another embodiment of the present invention; and
Fig. 7 is a flowchart of a method according to an example embodiment of the present invention.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF EXAMPLE EMBODIMENTS OF THE INVENTION

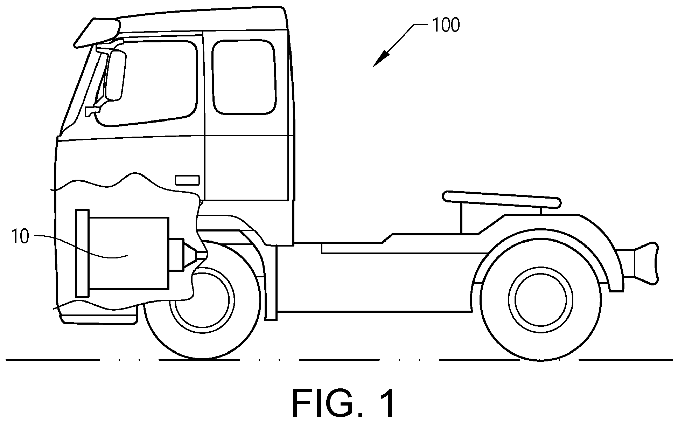

In fig. 1 a vehicle in the form of a truck 100 is shown. The truck 100 comprises an electrical machine 10 for propelling the truck, the electrical machine 10 being an electrical machine according to the third aspect of the present invention. Even though a vehicle in the form of a truck 100 is shown, it shall be noted that the present invention is also applicable to any other vehicle utilizing an electrical machine. As also mentioned in the above, the present invention may also be used for other applications than vehicles. However, the present invention has been found to be particularly advantageous for larger electrical machines which are used in vehicles for propulsion. Such electrical machines may have a voltage level of 300 V and above, such as 800 V and above.

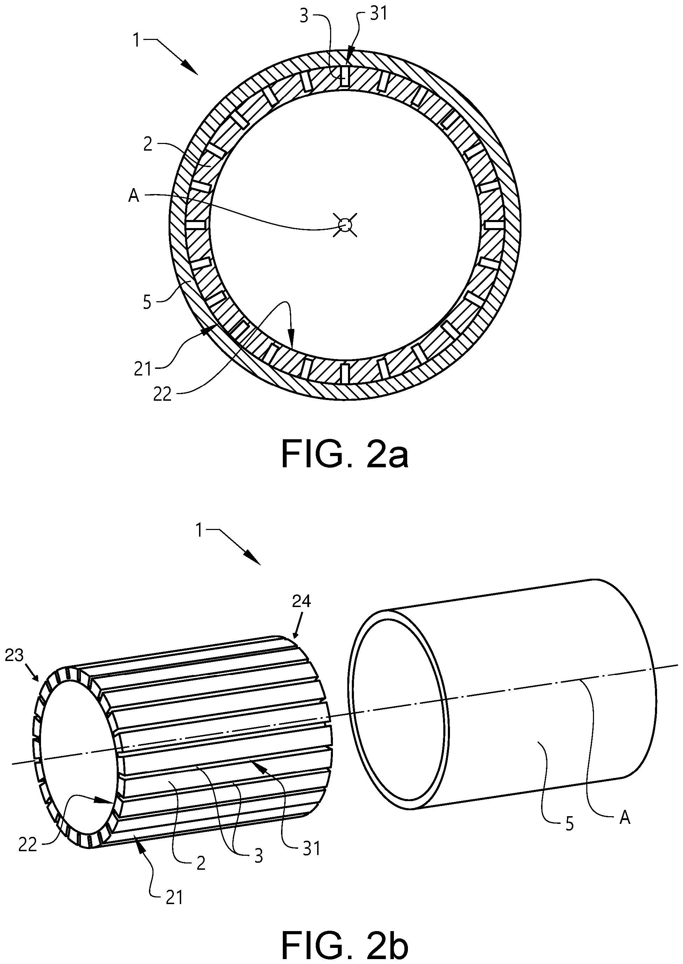

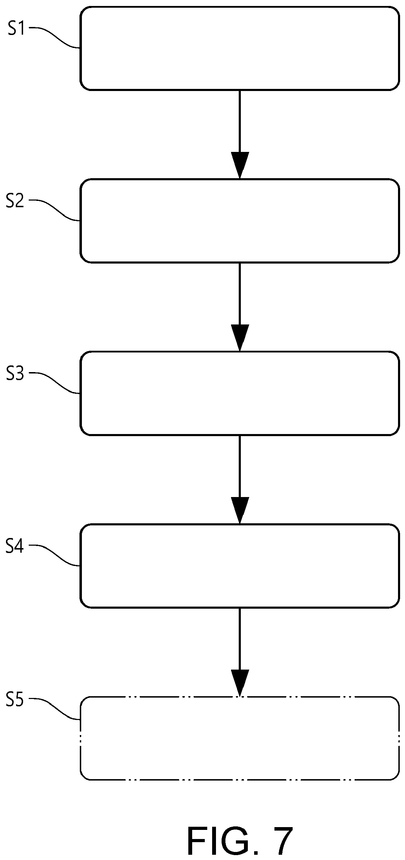

With respect to especially figs. 2a and 2b, a stator 1 according to an example embodiment is depicted, where fig. 2a is a cross-sectional view, which cross section is defined by a plane being perpendicular to a centre axis A of the stator 1. Fig. 2b depicts a perspective view of the stator 1 before it has been assembled. In addition, fig. 7 shows a flowchart of a method for manufacturing the stator 1 according to an example embodiment of the first aspect of the present invention. Accordingly, with respect to e.g. figs. 2a-b and 7, a manufacturing method for the stator 1 according to an example embodiment of the present invention will be described.

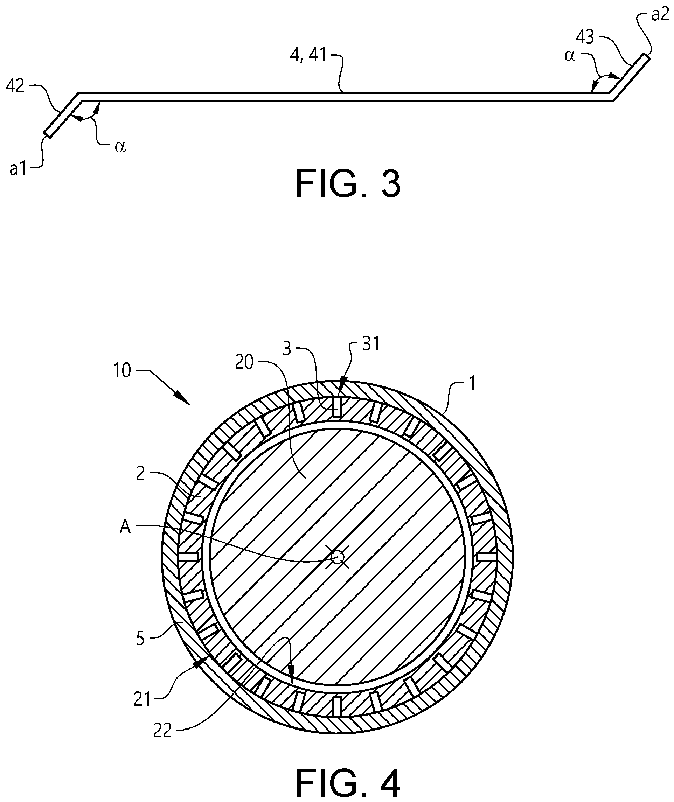

The method comprises:
S1: providing a first cylindrically formed stator core member 2 comprising a plurality of axially extending slots 3 distributed in a circumferential direction thereof, wherein the slots 3 form axially extending openings 31 on an outer 21 peripheral circumferential surface of the first cylindrically formed stator core member 2;
S2: inserting, in a radial direction, a plurality of conductor sets 4 (see fig. 3) into the slots 3 via the axially extending openings 31, wherein each conductor set 4 extends axially with respect to the stator 1 between a first and a second axial end a1, a2, wherein at least one of the first and second axial ends a1, a2 is an open axial end adapted to be connected to a corresponding open axial end a2, a1 of another conductor set 4 provided in another slot 3;
S3: providing a second stator core member 5; and
S4: covering, by the second stator core member 5, the axially extending openings 31 of the slots 3 comprising the plurality of conductor sets 4.

In the shown embodiments, the second stator core member 5 is cylindrically formed.

The step S4 of covering the axially extending openings of the slots 3 comprising the plurality of conductor sets 4 may comprise axially moving the second stator core member 5 relative the first cylindrically formed stator core member 2. Fig. 2b shows a situation before the second stator core member 5 has been axially moved relative the first cylindrically formed stator core member 2. As mentioned in the above, the second stator core member 5 may be axially moved by sliding it over the first cylindrically formed stator core member 2.

As mentioned in the above, the present invention may also be applicable when using one or more complete coil units (not shown). Accordingly, step S2 may additionally, or alternatively, comprise:
- inserting, in the radial direction, one or more complete coil units into the slots 3 via the axially extending openings 31, wherein each complete coil unit is formed by conductor segments which extend axially in respective slots 3.

In addition, the method may further comprise:
S5: connecting each open axial end a1 and/or a2 to the corresponding open axial end a2 and/or a1. As mentioned in the above, this may be performed by welding and/or soldering. This step of the method is shown as a box with dashed lines in fig. 7, which indicates that it is an optional step of the method.

Axially moving the second stator core member 5 relative the first cylindrically formed stator core member 2, e.g. by sliding, may be initiated from an axial end face of the first cylindrically formed stator core member 2 having conductor sets 4 with open axial ends, a1, a2, wherein connecting the open axial ends a1 and/or a2 at the axial end face from which the relative axial movement is initiated is conducted after the relative axial movement. Thereby, more space for the second stator core member 5 may be enabled at the side from where the second stator core member 5 is axially moved relative the first cylindrically formed stator core member 2. If for example the open axial ends already have been connected before the axial relative movement has been performed, the risk of interfering contact between the second stator core member 5 and the conductor sets 4 may be high. This can thus be alleviated by the aforementioned approach.

The method may comprise further steps, such as for example a step of insulating the inside of the slots by an insulation material before the plurality of conductor sets are inserted into the plurality of slots. For example, the insulation material may be pressed into each one of the slots, e.g. radially pressed into each slot. These steps may also be applicable in the case when using one or more complete coil units.

As shown in e.g. fig. 2b, the second stator core member 5 is a single-piece unit. Thereby it may be easier to cover the axially extending openings 31, requiring less manufacturing steps, by only axially moving the single-piece second stator core member 5 such that it covers the axially extending openings 31.

Each slot 3 may comprise one or more conductor sets 4, preferably more than one conductor set 4 in each slot. Additionally, or alternatively, each slot 3 may comprise conductor segments (not shown) of one or more complete coil units.

Alternatively, the second stator core member 5 may be moulded onto the first cylindrically formed stator core member 2.

The slots 3 as shown in the figures are straight and extend in the same direction as the axis A, i.e. are coaxial to the axis A. However, in alternative embodiments, the slots 3 may also be skewed/inclined with respect to the axis A.

The first cylindrically shaped stator core member 2 is preferably made of a plurality of laminations (not shown), each lamination being made of e.g. electrical steel. The second stator core member 5 may also be made of iron or of any other suitable material.

Fig. 3 shows a schematic side view of an example embodiment of a conductor set 4 according to the present invention. Each conductor set 4 may as shown comprise an axially extending straight portion 41 and axially outer inclined portions 42, 43 at each axial end a1, a2 which are open axial ends. The axially outer inclined portions 42, 43 form a respective angle α with respect to the straight portion 41. As mentioned in the above, the angles α may be similar or different, depending on the specific stator design. According to an example, the angle(s) may be in the range of 5-70 degrees. In addition, the respective transition between each inclined portion 42, 43 and the straight portion may be sharp as shown in fig. 3. However, and more preferably, the respective transition may also be smooth defined by a radius. As such, each inclined portion 42, 43 may be defined as a curved portion extending from the straight portion 41. Further, the straight portion 41 is inserted, i.e. in the radial direction, into the respective slot 3 and the axially outer inclined portions 42, 43 are provided axially outside respective axial end faces 23, 24 of the first cylindrically formed stator core member 2 and/or of the second stator core member 5. The conductor set 4 is typically constituted by several copper wires (not shown), each one having an open axial end which is adapted to be connected to a corresponding open axial end of another copper wire of another conductor set 4. Once the open axial ends a1, a2 have been connected to corresponding open axial ends a2, a1, a complete coil for the stator 1 is created. Further, each conductor (not shown), e.g. copper wire, of the conductor set 4 may have a square-shaped, rectangular-shaped or round-shaped cross-section (not shown).

Further, referring to the example when on or more complete coil units is/are inserted into the slots 3, each complete coil unit may comprise one or more conductors, such as one or more wires, preferably made of copper. The complete coil unit and its conductor segments, comprising the one or more conductors, may seamlessly extend in a zigzag pattern in the slots 3. Alternatively, any one of the conductors in each conductor segment may comprise one or more joints, such as one or more welding or soldering joints, to connect with another conductor of another conductor segment. Still further, each complete coil unit is preferably preformed before it is inserted into the slots. Forming the complete coil unit before it is inserted into the slots may increase the efficiency of the manufacturing of the stator 1. For example, forming the complete coil unit before it is inserted into the slots 3 may be more time efficient since bending of the complete coil unit during the insertion process may be difficult due to e.g. space restrictions.

Fig. 4 shows a cross-sectional view of an electrical machine 10 comprising the stator 1. The electrical machine 10 further comprises a rotor 20 provided radially inside the stator 1. Consequently, the stator 1 is here in the form of a hollow cylinder. The rotor 20 is a well-known component of an electrical machine 10 and will therefore not be described in more detail herein. Alternatively, the rotor 20 may be provided radially outside the stator 1. In such a case the rotor 20 may rather be a cylindrical hollow element, with the stator 1 mounted radially inside the rotor 20. As shown, the rotor 20 is adapted to rotate with respect to a rotational axis A corresponding to a centre axis of the stator 1.

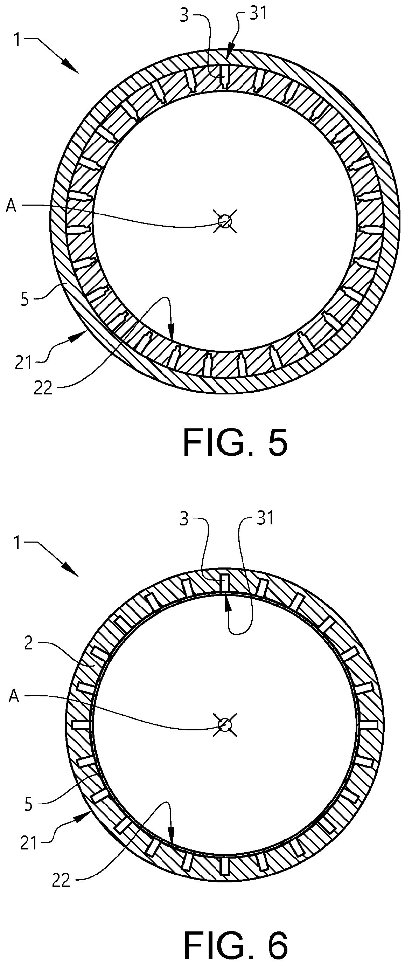

Figs. 5 and 6 show alternative embodiments of a stator 1 in cross-sectional views, which also may be manufactured according to the method as disclosed herein. Fig. 5 depicts an alternative embodiment where the bottom of each slot 3 tapers towards the centre axis A.

Fig. 6 depicts a stator configuration where the stator 1 has an inverted configuration, i.e. the axially extending openings 31 are instead provided on an inner peripheral circumferential surface 22 of the first cylindrically formed stator core member 2. Thereby, the second stator core member 5 is provided on the inside thereof and covers the axially extending openings 31 in which the conductor sets 4 (not shown) are provided. Even though a single-piece stator core member 5 is shown, it can also be in other forms. For example, in an alternative embodiment, the second stator core member 5 may be formed by a plurality of wedges covering the axially extending openings 31. A combination of the embodiments shown in fig. 5 and 6 may also be possible.

As mentioned in the above, the conductor sets 4 as shown in fig. 3 are preferably preformed before they are inserted into the slots 3.

In the following, possible features and feature combinations of a method for manufacturing a stator, a stator, an electrical machine and a vehicle according to the fifth, sixth, seventh and eighth aspects are disclosed, and presented as a list of items:
1. A method for manufacturing a stator (1) for an electrical machine (10), comprising:
   - providing (S1) a first cylindrically formed stator core member (2) comprising a plurality of axially extending slots (3) distributed in a circumferential direction thereof, wherein the slots form axially extending openings (31) on either an outer (21) or an inner (22) peripheral circumferential surface of the first cylindrically formed stator core member;
   - inserting (S2), in a radial direction, a plurality of conductor sets (4) into the slots via the axially extending openings, wherein each conductor set extends axially with respect to the stator between a first and a second axial end (a1, a2), wherein at least one of the first and second axial ends is an open axial end adapted to be connected to a corresponding open axial end of another conductor set provided in another slot; and/or
   - inserting, in the radial direction, one or more complete coil units into the slots (3) via the axially extending openings (31), wherein each complete coil unit is formed by connected conductor segments which extend axially in respective slots (3);
   - providing (S3) a second stator core member (5); and
   - covering (S4), by the second stator core member, the axially extending openings of the slots comprising the plurality of conductor sets.
2. The method according to item 1, wherein covering the axially extending openings of the slots comprising the plurality of conductor sets and/or the one or more complete coil units comprises axially moving the second stator core member relative the first cylindrically formed stator core member.
3. The method according to any one of the preceding items, wherein the method further comprises connecting (S5) each open axial end to the corresponding open axial end.
4. The method according to item 2 and 3, wherein axially moving the second core member relative the first cylindrically formed stator core member is initiated from an axial end face of the first cylindrically formed stator core member having conductor sets with open axial ends, wherein connecting the open axial ends at the axial end face from which the relative axial movement is initiated is conducted after the relative axial movement.
5. The method according to any one of the preceding items, wherein the second stator core member is a single-piece unit.
6. The method according to item 1, further comprising moulding the second stator core member onto the first cylindrically formed stator core member.
7. The method according to any one of the preceding items, wherein each conductor set comprises an axially extending straight portion (41) and an axially outer inclined portion (42, 43) at at least one of its axial ends which is an open axial end, wherein the axially outer inclined portion forms an angle (a) with respect to the straight portion, and wherein the straight portion is inserted into the respective slot and the axially outer inclined portion is provided axially outside an axial end face of the first cylindrically formed stator core member and/or of the second stator core member.
8. The method according to any one of the preceding items, wherein each conductor of the conductor set and/or of the one or more complete coil units has a square-shaped, rectangular-shaped or round-shaped cross section.
9. A stator (1) for an electrical machine (100), comprising:
   - a first cylindrically formed stator core member (2) comprising a plurality of axially extending slots (3) distributed in a circumferential direction thereof, wherein the slots form axially extending openings (31) on either an outer (21) or an inner (22) peripheral circumferential surface of the first cylindrically formed stator core member;
   - a plurality of conductor sets (4) provided in the slots, wherein each conductor set extends axially with respect to the stator between a first and second axial end (a1, a2), wherein at least one of the first and second axial ends is an open axial end adapted to be connected to a corresponding open axial end of another conductor set provided in another slot; and/or
   - one or more complete coil units provided in the slots (3), wherein each complete coil unit is formed by connected conductor segments which extend axially in respective slots (3); and
   - a second stator core member (5), wherein the axially extending openings (31) of the slots (3) are covered by the second stator core member.
10. The stator according to item 9, wherein each open axial end is connected, such as by a welding or soldering joint, to the corresponding open axial end.
11. The stator according to any one of items 9-10, wherein each conductor set comprises an axially extending straight portion (41) and an axially outer inclined portion (42, 43) at at least one of its axial ends which is an open axial end, wherein the axially outer inclined portion forms an angle (a) with respect to the straight portion, and wherein the straight portion is provided in the respective slot and the axially outer inclined portion is provided axially outside an axial end face of the first cylindrically formed stator core member and/or of the second stator core member.
12. The stator according to any one of items 9-11, wherein the second stator core member is a single-piece unit.
13. The stator according to any one of items 9-12, wherein each conductor of the conductor set and/or of the one or more complete coil units has a square-shaped, rectangular-shaped, or round-shaped cross section.
14. An electrical machine (10) comprising the stator according to any one of items 9-13.
15. A vehicle (100) comprising the electrical machine according to item 14.

It is to be understood that the present invention is not limited to the embodiments described above and illustrated in the drawings; rather, the skilled person will recognize that many changes and modifications may be made within the scope of the appended claims.

## Claims

1. A method for manufacturing a stator (1) for an electrical machine (10), comprising:
- providing (S1) a first cylindrically formed stator core member (2) comprising a plurality of axially extending slots (3) distributed in a circumferential direction thereof, wherein the slots form axially extending openings (31) on either an outer (21) or an inner (22) peripheral circumferential surface of the first cylindrically formed stator core member;
- inserting (S2), in a radial direction, a plurality of conductor sets (4) into the slots via the axially extending openings, wherein each conductor set extends axially with respect to the stator between a first and a second axial end (a1, a2), wherein at least one of the first and second axial ends is an open axial end adapted to be connected to a corresponding open axial end of another conductor set provided in another slot;
- providing (S3) a second stator core member (5); and
- covering (S4), by the second stator core member, the axially extending openings of the slots comprising the plurality of conductor sets.

2. The method according to claim 1, wherein covering the axially extending openings of the slots comprising the plurality of conductor sets comprises axially moving the second stator core member relative the first cylindrically formed stator core member.

3. The method according to any one of the preceding claims, wherein the method further comprises connecting (S5) each open axial end to the corresponding open axial end.

4. The method according to claim 2 and 3, wherein axially moving the second core member relative the first cylindrically formed stator core member is initiated from an axial end face of the first cylindrically formed stator core member having conductor sets with open axial ends, wherein connecting the open axial ends at the axial end face from which the relative axial movement is initiated is conducted after the relative axial movement.

5. The method according to any one of the preceding claims, wherein the second stator core member is a single-piece unit.

6. The method according to claim 1, further comprising moulding the second stator core member onto the first cylindrically formed stator core member.

7. The method according to any one of the preceding claims, wherein each conductor set comprises an axially extending straight portion (41) and an axially outer inclined portion (42, 43) at at least one of its axial ends which is an open axial end, wherein the axially outer inclined portion forms an angle (a) with respect to the straight portion, and wherein the straight portion is inserted into the respective slot and the axially outer inclined portion is provided axially outside an axial end face of the first cylindrically formed stator core member and/or of the second stator core member.

8. The method according to any one of the preceding claims, wherein each conductor of the conductor set has a square-shaped, rectangular-shaped or round-shaped cross section.

9. A stator (1) for an electrical machine (100), comprising:
- a first cylindrically formed stator core member (2) comprising a plurality of axially extending slots (3) distributed in a circumferential direction thereof, wherein the slots form axially extending openings (31) on either an outer (21) or an inner (22) peripheral circumferential surface of the first cylindrically formed stator core member;
- a plurality of conductor sets (4) provided in the slots, wherein each conductor set extends axially with respect to the stator between a first and second axial end (a1, a2), wherein at least one of the first and second axial ends is an open axial end adapted to be connected to a corresponding open axial end of another conductor set provided in another slot;
- a second stator core member (5), wherein the axially extending openings of the slots are covered by the second stator core member.

10. The stator according to claim 9, wherein each open axial end is connected, such as by a welding or soldering joint, to the corresponding open axial end.

11. The stator according to any one of claims 9-10, wherein each conductor set comprises an axially extending straight portion (41) and an axially outer inclined portion (42, 43) at at least one of its axial ends which is an open axial end, wherein the axially outer inclined portion forms an angle (a) with respect to the straight portion, and wherein the straight portion is provided in the respective slot and the axially outer inclined portion is provided axially outside an axial end face of the first cylindrically formed stator core member and/or of the second stator core member.

12. The stator according to any one of claims 9-11, wherein the second stator core member is a single-piece unit.

13. The stator according to any one of claims 9-12, wherein each conductor of the conductor set has a square-shaped, rectangular-shaped, or round-shaped cross section.

14. An electrical machine (10) comprising the stator according to any one of claims 9-13.

15. A vehicle (100) comprising the electrical machine according to claim 14.
